# EUROPÄISCHE PATENTANMELDUNG

(11) **EP 4 273 035 A1**
(43) Veröffentlichungstag der Anmeldung: **08.11.2023**
(21) Anmeldenummer: 23170350.5
(22) Anmeldetag: 27.04.2023
(51) Int. Cl.: B62M 6/45, B62M 6/55, B62J 45/421, B62J 45/413

(54) **ANTRIEBSVORRICHTUNG FÜR EIN FAHRRAD UND VERFAHREN ZUR STEUERUNG**

(30) Priorität: 02.05.2022 DE 102022204273
(71) Anmelder: ZF Friedrichshafen AG, 88046 Friedrichshafen (DE)
(72) Erfinder: Sommer, Marc, 88074 Meckenbeuren (DE); Rösch, Patrik, 88326 Aulendorf (DE)
(74) Vertreter: ZF Friedrichshafen AG

(57) **Zusammenfassung**

Die Erfindung betrifft eine Antriebsvorrichtung (1) für ein Fahrrad (100), umfassend
• ein Schaltgetriebe (2) mit mehreren Gängen und einer Abtriebswelle (3),
• eine Kurbelwelle (5) mit einer Tretkurbel (6) zum Einleiten einer Antriebsleistung eines Fahrradfahrers in das Schaltgetriebe (2), wobei die Kurbelwelle (5) mit der Abtriebswelle (3) wirkverbunden ist,
• eine elektrische Maschine (7) mit einer Rotorwelle (8) zum Einleiten einer Antriebleistung der elektrischen Maschine (7) in das Schaltgetriebe (2), wobei die Rotorwelle (8) über einen Freilauf (9) mit der Abtriebswelle (3) wirkverbindbar ist,
• Mittel zum Erfassen eines Tretkurbelwinkels sowie einer Kurbelwellendrehzahl und Generieren entsprechender Sensordaten,
• Mittel zum Erfassen einer Abtriebswellendrehzahl und Generieren entsprechender Sensordaten,
• Mittel zum Erfassen einer Rotorwellendrehzahl und Generieren entsprechender Sensordaten, und
• eine Steuereinrichtung (10), die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine (7) zu steuern.

Ferner betrifft die Erfindung mehrere Verfahren zur Steuerung der Antriebsvorrichtung (1), eine Steuereinrichtung (10) und ein Fahrrad (100).

## Beschreibung

Die Erfindung betrifft eine Antriebsvorrichtung für ein Fahrrad, mit einem Schaltgetriebe, einer Kurbelwelle, einer elektrischen Maschine und einer Steuereinrichtung. Ferner betrifft die Erfindung mehrere Verfahren zur Steuerung der Antriebsvorrichtung, eine Steuereinrichtung zur Durchführung der Verfahren und ein Fahrrad mit einer solchen Antriebsvorrichtung.

Aus dem Stand der Technik ist eine Vielzahl von Fahrrädern bekannt, bei denen neben einem Schaltgetriebe ein Elektromotor zum Einsatz kommt. Beispielsweise offenbart die DE 10 2016 225 159 A1 ein Getriebe für ein Fahrrad, mit einer Abtriebswelle, einem Schaltgetriebe, das mit einer Tretlagerkurbelwelle wirkverbindbar ist und das mit der Abtriebswelle wirkverbunden oder wirkverbindbar ist, und einer elektrischen Maschine, die mit der Abtriebswelle wirkverbunden oder wirkverbindbar ist. Die elektrische Maschine ist dem Schaltgetriebe triebtechnisch nachgeschaltet.

Ferner offenbart die DE 10 2018 203 361 B3 ein Verfahren zum Antrieb eines Elektrofahrrads, wobei das Verfahren die folgenden Schritte aufweist: Erfassung einer ersten Sensorgröße, welche eine aktuelle Kadenz eines Fahrers des Elektrofahrrads repräsentiert; Erfassung einer zweiten Sensorgröße, welche eine aktuelle Trittkraft des Fahrers repräsentiert; und Erfassung einer aktuellen Geschwindigkeit des Elektrofahrrads; Erfassung einer Eingabe des Fahrers, umfassend eine Sollgeschwindigkeit des Elektrofahrrads und eine Solltrittkraft des Fahrers, und/oder eine Sollkadenz des Fahrers; Anpassung eines Übersetzungsverhältnisses eines elektrisch ansteuerbaren Schaltgetriebes des Elektrofahrrads in Abhängigkeit der erfassten ersten Sensorgröße, der erfassten zweiten Sensorgröße, der Solltrittkraft und/oder der Sollkadenz; und Regelung des Elektromotors in Abhängigkeit der erfassten Geschwindigkeit und der Sollgeschwindigkeit.

Die Aufgabe der vorliegenden Erfindung besteht darin, eine Antriebsvorrichtung für ein Fahrrad und ein Verfahren zur Steuerung der Antriebsvorrichtung zu schaffen, die eine verschleißarme Gangrückschaltung ermöglichen. Insbesondere sollen Betätigungs- und Übertragungskräfte während der Gangrückschaltung verringert werden.

Diese Aufgaben werden gelöst durch die Merkmale der Patentansprüche 1 und 5 bis 7. Vorteilhafte Ausführungsformen sind Gegenstand der davon abhängigen Ansprüche, der nachfolgenden Beschreibung sowie der Figuren.

Eine erfindungsgemäße Antriebsvorrichtung für ein Fahrrad umfasst ein Schaltgetriebe mit mehreren Gängen und einer Abtriebswelle, wobei der jeweilige Gang mittels einer Schalteinrichtung einstellbar ist, wobei die Abtriebswelle dazu eingerichtet ist, über einen Zugmitteltrieb mit einem Antriebsrad des Fahrrads wirkverbunden zu sein, eine Kurbelwelle mit einer Tretkurbel zum Einleiten einer Antriebsleistung eines Fahrradfahrers in das Schaltgetriebe, wobei die Kurbelwelle mit der Abtriebswelle wirkverbunden ist, eine elektrische Maschine mit einer Rotorwelle zum Einleiten einer Antriebleistung der elektrischen Maschine in das Schaltgetriebe, wobei die Rotorwelle über einen Freilauf mit der Abtriebswelle wirkverbindbar ist, wobei der Freilauf dazu eingerichtet ist, die Abtriebswelle von der Rotorwelle zu entkoppeln, wenn eine Abtriebswellendrehzahl größer als eine Rotorwellendrehzahl ist, Mittel zum Erfassen eines Tretkurbelwinkels sowie einer Kurbelwellendrehzahl und Generieren entsprechender Sensordaten, Mittel zum Erfassen einer Abtriebswellendrehzahl und Generieren entsprechender Sensordaten, Mittel zum Erfassen einer Rotorwellendrehzahl und Generieren entsprechender Sensordaten, und eine Steuereinrichtung, die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine zu steuern.

Mit anderen Worten erfolgt die Gangrückschaltung stets in Abhängigkeit der Sensordaten von Tretkurbelwinkel, Kurbelwellendrehzahl, Abtriebswellendrehzahl und Rotorwellendrehzahl, wobei diese Sensordaten über dazugehörige Mittel entweder unmittelbar an dem jeweiligen Bauteil sensiert werden oder mittelbar über weitere Grö-ßen berechnet werden. In Abhängigkeit dieser Sensordaten wird die Bestromung der elektrischen Maschine derart gesteuert bzw. geregelt, dass Betätigungs- und Übertragungskräfte während der Gangrückschaltung verringert werden, um die Gangrückschaltung besonders verschleißarm durchzuführen.

Insbesondere ist unter dem Begriff "Erfassen" nicht nur ein unmittelbares Sensieren, sondern auch ein mittelbares Berechnen der jeweiligen Größe aus anderen Größen zu verstehen. Unter dem Begriff "Sensordaten" sind Informationen zu jeweiligen Grö-ßen zu verstehen, die mittels der Steuervorrichtung verarbeitet werden können.

Der Fahrradfahrer leitet über Pedalen an der Tretkurbel eine Antriebsleistung, also eine Antriebsdrehzahl und ein Antriebsdrehmoment, auf die Kurbelwelle ein, wobei die Kurbelwelle über das Schaltgetriebe mit der Abtriebswelle wirkverbunden ist. Die elektrische Maschine weist einen gehäusefesten Stator und einen mit der Rotorwelle drehfest verbundenen Rotor auf, wobei über die Rotorwelle eine weitere Antriebsleistung, also eine weitere Antriebsdrehzahl und ein weiteres Antriebsdrehmoment, in das Schaltgetriebe eingeleitet wird. Im Leistungsfluss zwischen der Rotorwelle und der Abtriebswelle ist der Freilauf zum Koppeln und Entkoppeln der Rotorwelle von der Abtriebswelle angeordnet. Im Schaltgetriebe wird die Antriebsleistung vom Fahrradfahrer und die Antriebsleistung von der elektrischen Maschine überlagert und in Abhängigkeit des jeweiligen Ganges übersetzt. Über die Abtriebswelle und den Zugmitteltrieb wird diese Antriebsleistung an das Antriebsrad des Fahrrads übertragen.

Insbesondere weist das Schaltgetriebe mehrere Zahnradpaare auf, wobei die Schalteinrichtung einen Aktuator und eine Schaltwalze umfasst. Mittels der Schalteinrichtung sind die jeweiligen Zahnradpaare derart schaltbar, dass die Gänge, und somit die Übersetzungsverhältnisse zwischen den beiden Eingangswellen des Schaltgetriebes, nämlich der Rotorwelle und der Kurbelwelle, und der Ausgangswelle des Schaltgetriebes, nämlich der Abtriebswelle, eingestellt werden. Für die Einstellung bzw. Änderung der Übersetzung des Schaltgetriebes werden Steuerbefehle von der Steuereinrichtung an die Schalteinrichtung übermittelt, sodass diese beispielsweise automatisiert betrieben wird. Alternativ erfolgt eine Änderung der Übersetzung des Schaltgetriebes auf Wunsch des Fahrradfahrers bei Betätigung entsprechender Eingabemittel. Beispielsweise kann die Rotorwelle der elektrischen Maschine über ein Planetengetriebe mit einer Eingangswelle des Schaltgetriebes wirkverbunden sein, um die Übersetzung weiter zu erhöhen. Insbesondere ist die elektrische Maschine mit einem wiederaufladbaren, elektrischen Speicher verbunden.

Wenn zwei Elemente, insbesondere zwei Wellen miteinander wirkverbunden sind, ist darunter zu verstehen, dass sie zwangsläufig mit einer proportionalen Drehzahl drehen. Dabei können zwischen den beiden Elementen weitere Elemente angeordnet sein über die eine mittelbare Verbindung erfolgt oder die beiden Elemente sind unmittelbar miteinander verbunden. Zwei Elemente sind dann wirkverbindbar, wenn sie entweder miteinander verbunden oder voneinander entkoppelt werden können. Beispielsweise ist die Rotorwelle über den Freilauf mit der Abtriebswelle verbindbar oder entkoppelbar. Durch den zwischen der Abtriebswelle und der Rotorwelle angeordneten Freilauf wird die Abtriebswelle von der Rotorwelle entkoppelt, sobald die Rotorwellendrehzahl kleiner als die Abtriebswellendrehzahl ist. Dadurch wird beispielsweise verhindert, dass der Fahrradfahrer die Rotorwelle mitschleppt, wenn die elektrische Maschine abgeschaltet ist.

Vorzugsweise ist mindestens ein erster Sensor mit der Kurbelwelle drehfest verbunden und als Mittel zum Erfassen eines Tretkurbelwinkels sowie einer Kurbelwellendrehzahl eingerichtet. Insbesondere kann der erste Sensor entweder unmittelbar an der Kurbelwelle oder an einem drehfest mit der Kurbelwelle verbundenen Element angeordnet sein. Unter einer "drehfesten Verbindung" ist zu verstehen, dass zwei Elemente mit der gleichen Drehzahl rotieren. Beispielsweise ist der erste Sensor als Drehwinkelsensor ausgebildet und dazu eingerichtet, den Tretkurbelwinkel im Bereich von 0 Grad bis 360 Grad zu sensieren, wobei dies einer vollen Umdrehung entspricht. Insbesondere ist der Drehwinkelsensor durch einen zeitlichen Bezug auch zum Sensieren der Kurbelwellendrehzahl eingerichtet. Demnach werden die Umdrehungen der Kurbelwelle pro Minute sensiert. Alternativ kann der Tretkurbelwinkel von Mitteln zum Erfassen des Tretkurbelwinkels berechnet werden. Beispielsweise kann der Tretkurbelwinkel und somit auch die Kurbelwellendrehzahl aus dem Drehmomentverlauf der Kurbelwelle berechnet werden, wobei der Drehmomentverlauf im Wesentlichen einer Sinusfunktion entspricht und die Hochpunkte der Funktion bei 90 Grad und 270 Grad sind, wobei die Tiefpunkte der Funktion bei 0 Grad bzw. 360 Grad und 180 Grad sind. Dies rührt daher, dass der Fahrradfahrer bei einem Tretkurbelwinkel von 90 Grad und 270 Grad den größten Hebelarm zum Aufbringen seiner Trittkraft auf die Pedalen hat. Demgegenüber ist der Hebelarm bei einem Tretkurbelwinkel von 0 Grad bzw. 360 Grad und 180 Grad minimal, sodass diese Tretkurbelwinkel als Totpunkte der Tretkurbel definiert sind. Bei einem Tretkurbelwinkel von 90 Grad und 270 Grad sind die Tretkurbeln horizontal ausgerichtet. Bei einem Tretkurbelwinkel von 0 Grad bzw. 360 Grad und 180 Grad sind die Tretkurbeln vertikal ausgerichtet.

Vorzugsweise ist mindestens ein zweiter Sensor mit der Abtriebswelle drehfest verbunden und als Mittel zum Erfassen einer Abtriebswellendrehzahl und Generieren entsprechender Sensordaten eingerichtet. Beispielsweise kann der zweite Sensor unmittelbar an der Abtriebswelle oder an einem Kettenblatt, das drehfest mit der Abtriebswelle verbunden und Teil des Zugmitteltriebs ist, oder an einem anderen drehfest mit der Abtriebswelle verbundenen Element angeordnet sein. Beispielsweise ist der zweite Sensor als Hall-Sensor ausgebildet und eingerichtet die Abtriebswellendrehzahl zu sensieren. Insbesondere werden dabei die Umdrehungen der Abtriebswelle pro Minute sensiert. Alternativ kann die Abtriebswellendrehzahl von Mitteln zum Erfassen der Abtriebswellendrehzahl berechnet werden. Beispielsweise kann die Abtriebswellendrehzahl aus der Geschwindigkeit des Fahrrads oder einer Drehzahl am Antriebsrad des Fahrrads berechnet werden.

Vorzugsweise ist mindestens ein dritter Sensor mit der Rotorwelle drehfest verbunden und als Mittel zum Erfassen einer Rotorwellendrehzahl und Generieren entsprechender Sensordaten eingerichtet. Insbesondere kann der dritte Sensor entweder unmittelbar an der Rotorwelle oder an einem drehfest mit der Rotorwelle verbundenen Element angeordnet sein. Beispielsweise ist der dritte Sensor als Hall-Sensor ausgebildet und dazu eingerichtet, die Rotorwellendrehzahl zu sensieren. Insbesondere werden dabei die Umdrehungen der Rotorwelle pro Minute sensiert. Alternativ kann die Rotorwellendrehzahl von Mitteln zum Erfassen der Rotorwellendrehzahl berechnet werden. Beispielsweise kann die Rotorwellendrehzahl aus der Bestromung der elektrischen Maschine berechnet werden, wobei hierzu insbesondere die an der elektrischen Maschine anliegende Spannung erfasst wird.

Gemäß einem ersten erfindungsgemäßen Verfahren zur Steuerung der erfindungsgemäßen Antriebsvorrichtung wird bei Anforderung einer Gangrückschaltung aus einem aktuell eingelegten Gang in einen nächstkleineren Gang eine Bestromung der elektrischen Maschine in einem Bereich von mindestens 1 Grad bis höchstens 45 Grad vor Erreichen eines Totpunktes der Tretkurbel zumindest derart abgesenkt, dass eine Rotorwellendrehzahl geringer als eine Abtriebswellendrehzahl ist. Dadurch wird der Freilauf aktiviert, sodass die Rotorwelle von der Abtriebswelle entkoppelt ist und relativ dazu rotieren kann. Der Bereich von mindestens 1 Grad bis höchstens 45 Grad vor Erreichen des Totpunktes der Tretkurbel kann in Abhängigkeit vom Bezugssystem eine Unschärfe aufweisen. Beispielsweise kann die Unschärfe bei einem Neigungswinkel des Fahrrads von 20 Grad, wenn das Fahrrad bergauf oder bergab fährt, dementsprechend auch 20 Grad betragen. Die Neigung des Fahrrads verschiebt somit den oberen und unteren Totpunkt der Tretkurbel, der bei einer neigungsfreien Positionierung des Fahrrads bei 0 Grad bzw. 360 Grad und 180 Grad angeordnet ist. Unter einem "Totpunkt der Tretkurbel" ist ein Winkel an der Tretkurbel mit einem minimalen Hebelarm zum Einleiten einer Trittkraft des Fahrradfahrers zu verstehen. Demnach kann der Fahrradfahrer im oberen und unteren Totpunkt der Tretkurbel nur ein minimales Drehmoment und somit eine minimale Antriebsleistung auf die Kurbelwelle einleiten. Gemäß einem weiteren Verfahrensschritt des erfindungsgemäßen Verfahrens wird der aktuell eingelegte Gang ausgelegt, wenn eine Kurbelwellendrehzahl kleiner als eine Abtriebswellendrehzahl ist. Dadurch werden Auslegekräfte bei der Gangschaltung und somit auch ein Verschleiß verringert. Die elektrische Maschine wird nach Überschreitung des Totpunktes der Tretkurbel derart stark bestromt, dass eine Rotorwellendrehzahl an eine höhere Zieldrehzahl für den nächstkleineren Gang angenähert wird. Der nächstkleinere Gang wird eingelegt, sobald die Zieldrehzahl für den nächstkleineren Gang erreicht wird. Dadurch werden Einlegekräfte bei der Gangschaltung und somit auch ein Verschleiß verringert. Sobald der nächstkleinere Gang eingelegt ist, ist die Gangrückschaltung abgeschlossen. Insbesondere erfolgt die Gangrückschaltung mittels formschlüssiger Schaltelemente.

Gemäß einem zweiten erfindungsgemäßen Verfahren zur Steuerung der erfindungsgemäßen Antriebsvorrichtung wird bei Anforderung einer Gangrückschaltung aus einem aktuell eingelegten Gang in einen nächstkleineren Gang eine Bestromung der elektrischen Maschine in einem Bereich von mindestens 1 Grad bis höchstens 45 Grad vor Erreichen eines Totpunktes der Tretkurbel zumindest derart abgesenkt, dass eine Rotorwellendrehzahl geringer als eine Abtriebswellendrehzahl ist. Wenn eine Kurbelwellendrehzahl größer als eine Abtriebswellendrehzahl ist, wird die elektrische Maschine in einem Bereich von mindestens 45 Grad bis höchstens 90 Grad vor Erreichen eines nächsten Totpunktes der Tretkurbel derart stark bestromt, dass die Abtriebswellendrehzahl erhöht wird. Mithin wird dadurch der Freilauf geschlossen, sodass die Freilauffunktion inaktiv ist und die Rotorwelle drehfest mit der Abtriebswelle verbunden ist. Beispielsweise kann eine Kurbelwellendrehzahl größer als eine Abtriebswellendrehzahl sein, wenn das Antriebsrad des Fahrrads über den Zugmitteltrieb eine Drehzahl auf die Abtriebswelle aufprägt oder der Fahrradfahrer einen besonders runden Tritt hat oder über Kickpedale einwirkt. Die Drehzahl der Rotorwelle wird durch die Bestromung der elektrischen Maschine an die Drehzahl des aktuell eingelegten Gangs angenähert und der Fahrradfahrer aus dem Tritt gebracht, also das Fahrrad kurzzeitig mit der elektrischen Maschine beschleunigt. Gemäß einem weiteren Verfahrensschritt des erfindungsgemäßen Verfahrens wird eine Bestromung der elektrischen Maschine in einem Bereich von mindestens 1 Grad bis höchstens 45 Grad vor Erreichen des Totpunktes der Tretkurbel derart abgesenkt, dass eine Rotorwellendrehzahl geringer als eine Abtriebswellendrehzahl ist, wodurch der Freilauf geöffnet wird und somit die Freilauffunktion aktiviert ist. Der aktuell eingelegte Gang wird nur dann ausgelegt, wenn eine Kurbelwellendrehzahl kleiner als eine Abtriebswellendrehzahl ist, ansonsten werden die beiden vorhergehenden Verfahrensschritte wiederholt. Diese Wiederholung kann mehrmals hintereinander erfolgen bis die Bedingung, wonach die Kurbelwellendrehzahl kleiner als die Abtriebswellendrehzahl sein muss, erfüllt ist. Dadurch werden Auslegekräfte bei der Gangschaltung und somit auch ein Verschleiß verringert. Sobald diese Bedingung erfüllt ist, wird die elektrische Maschine nach Überschreitung des Totpunktes der Tretkurbel derart stark bestromt, dass eine Rotorwellendrehzahl an eine höhere Zieldrehzahl für den nächstkleineren Gang angenähert wird, wobei der nächstkleinere Gang eingelegt wird, sobald die Zieldrehzahl für den nächstkleineren Gang erreicht wird. Dadurch werden Einlegekräfte bei der Gangschaltung und somit auch ein Verschleiß verringert. Sobald der nächstkleinere Gang eingelegt ist, ist die Gangrückschaltung abgeschlossen.

Gemäß einem dritten erfindungsgemäßen Verfahren zur Steuerung der erfindungsgemäßen Antriebsvorrichtung erfolgt bei Anforderung einer Gangrückschaltung aus einem aktuell eingelegten Gang in einen nächstkleineren Gang eine Bestrom ung der elektrischen Maschine in einem Bereich von mindestens 45 Grad bis höchstens 90 Grad vor Erreichen eines Totpunktes der Tretkurbel derart, dass die Abtriebswellendrehzahl erhöht wird. Dadurch wird der Freilauf geschlossen, sodass die Rotorwelle und die Abtriebswelle antriebswirksam miteinander verbunden sind. Ferner wird die Drehzahl der Rotorwelle an die Drehzahl des aktuell eingelegten Gangs angenähert und der Fahrradfahrer aus dem Tritt gebracht, also das Fahrrad kurzzeitig mit der elektrischen Maschine beschleunigt. Gemäß einem weiteren Verfahrensschritt des erfindungsgemäßen Verfahrens wird eine Bestromung der elektrischen Maschine in einem Bereich von mindestens 1 Grad bis höchstens 45 Grad vor Erreichen des Totpunktes der Tretkurbel derart abgesenkt, dass eine Rotorwellendrehzahl geringer als eine Abtriebswellendrehzahl ist, wodurch der Freilauf geöffnet und die Rotorwelle von der Abtriebswelle entkoppelt wird. Der aktuell eingelegte Gang wird nur dann ausgelegt, wenn eine Kurbelwellendrehzahl kleiner als eine Abtriebswellendrehzahl ist, ansonsten werden die beiden vorhergehenden Verfahrensschritte wiederholt, bis diese Bedingung erfüllt ist. Dadurch werden Auslegekräfte bei der Gangschaltung und somit auch ein Verschleiß verringert. Die elektrische Maschine wird nach Überschreitung des Totpunktes der Tretkurbel derart stark bestromt, dass eine Rotorwellendrehzahl an eine höhere Zieldrehzahl für den nächstkleineren Gang angenähert wird, wobei der nächstkleinere Gang eingelegt wird, sobald die Zieldrehzahl für den nächstkleineren Gang erreicht wird. Dadurch werden Einlegekräfte bei der Gangschaltung und somit auch ein Verschleiß verringert. Sobald der nächstkleinere Gang eingelegt ist, ist die Gangrückschaltung abgeschlossen. Das dritte erfindungsgemäße Verfahren kann die Zeit für die Gangrückschaltung gegenüber dem zweiten erfindungsgemäßen Verfahren verkürzen, weil Verfahrensschritte wegfallen.

Vorzugsweise wird die Bestromung der elektrischen Maschine in dem Bereich von mindestens 45 Grad bis höchstens 90 Grad vor Erreichen des Totpunktes der Tretkurbel um mindestens 20% angehoben. Mit anderen Worten wird die elektrische Maschine derart bestromt, dass mindestens 20% mehr Leistung generiert wird als zuvor. Insbesondere erfolgt die Bestromung der elektrischen Maschine derart, dass maximal 100% der Antriebsleistung der elektrischen Maschine abgerufen wird.

Vorzugsweise wird die Bestromung der elektrischen Maschine in dem Bereich von mindestens 1 Grad bis höchstens 45 Grad vor Erreichen des Totpunktes der Tretkurbel abgestellt. Mithin wird die elektrische Maschine abgeschaltet, sodass keine Bestromung der elektrischen Maschine mehr erfolgt, wodurch insbesondere elektrische Energie eingespart wird.

Vorzugsweise entspricht die Bestromung der elektrischen Maschine nach Überschreiten des Totpunktes der Tretkurbel im Wesentlichen der Bestromung der elektrischen Maschine vor der Absenkung der Bestromung. Somit generiert die elektrische Maschine nach Überschreiten des Totpunktes der Tretkurbel eine identische Antriebsleistung wie vor der Absenkung der Bestromung.

Eine erfindungsgemäße Steuereinrichtung, ist dazu ausgebildet, ein erfindungsgemäßes Verfahren durchzuführen. Die obigen Definitionen sowie Ausführungen zu technischen Effekten, Vorteilen und vorteilhaften Ausführungsformen des erfindungsgemäßen Verfahrens gelten sinngemäß ebenfalls für die erfindungsgemäße Steuereinrichtung.

Ein erfindungsgemäßes Fahrrad umfasst eine erfindungsgemäße Antriebsvorrichtung, die über einen Zugmitteltrieb mit einem Antriebsrad des Fahrrads wirkverbunden ist. Das erfindungsgemäße Fahrrad umfasst die üblichen Komponenten eines mit Muskelkraft antreibbaren Fahrrades und zusätzlich die erfindungsgemäße Antriebsvorrichtung, welche eine als Traktionsmotor ausgebildete elektrische Maschine, mit dem Schaltgetriebe sowie einen elektrischen Energiespeicher aufweist. Derartige Fahrräder sind unter der Bezeichnung Elektrofahrrad, E-Bike oder Pedelec bekannt. Der elektrische Antrieb kann die Belastung des Radfahrers bei der Fortbewegung verringern oder seine Reichweite steigern. Die obigen Definitionen sowie Ausführungen zu technischen Effekten, Vorteilen und vorteilhaften Ausführungsformen des erfindungsgemäße Antriebsvorrichtung gelten sinngemäß ebenfalls für das erfindungsgemäße Fahrrad.

Im Folgenden werden Ausführungsbeispiele der Erfindung anhand der schematischen Zeichnungen näher erläutert, wobei gleiche Elemente mit dem gleichen Bezugszeichen versehen sind. Hierbei zeigt
- Fig. 1: eine stark vereinfachte schematische Darstellung eines Fahrrads mit einer erfindungsgemäßen Antriebsvorrichtung,
- Fig. 2: eine stark vereinfachte schematische Darstellung der erfindungsgemäßen Antriebsvorrichtung gemäß Fig. 1,
- Fig. 3: ein Diagramm zur Veranschaulichung eines beispielhaften Ablaufs eines ersten erfindungsgemäßen Verfahrens,
- Fig. 4: ein Diagramm zur Veranschaulichung eines beispielhaften Ablaufs eines zweiten erfindungsgemäßen Verfahrens, und
- Fig. 5: ein Diagramm zur Veranschaulichung eines beispielhaften Ablaufs eines dritten erfindungsgemäßen Verfahrens.

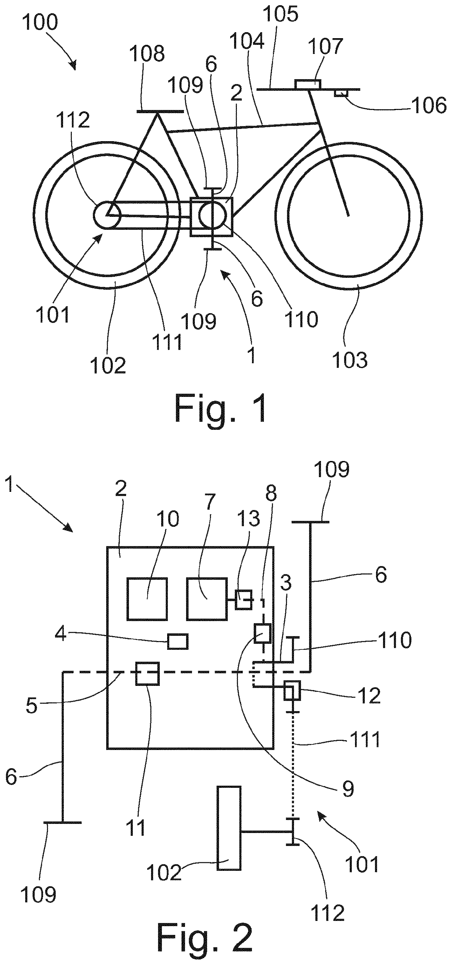

Gemäß Fig. 1 ist ein erfindungsgemäßes Fahrrad 100 stark vereinfacht dargestellt. Das Fahrrad 100 weist einen Rahmen 104 auf, an dem ein Vorderrad 103, ein als Antriebsrad 102 ausgebildetes Hinterrad, ein Fahrradlenker 105 und ein Sattel 108 angeordnet sind. Ferner weist das Fahrrad 100 eine Antriebsvorrichtung 1 auf, die dazu eingerichtet ist, das Fahrrad 100 zumindest mit einer Muskelkraft eines - hier nicht dargestellten - Fahrradfahrers anzutreiben. Dazu sitzt der Fahrradfahrer beim Fahren beispielsweise auf dem Sattel 108 und bringt über jeweilige Pedalen 109, die über jeweilige Tretkurbeln 6 mit der Antriebsvorrichtung 1 verbunden sind, eine Antriebsleistung in das Schaltgetriebe 2 der Antriebsvorrichtung 1 ein. Die Antriebsvorrichtung 1 umfasst auch eine elektrische Maschine 7, die nur in Fig. 2 dargestellt und dazu eingerichtet ist, ihrerseits auch eine Antriebsleistung in das Schaltgetriebe 2 einzuleiten, um den Fahrradfahrer zu unterstützen. Die Antriebsleistungen der elektrischen Maschine 7 und des Fahrradfahrers werden im Schaltgetriebe 2 überlagert und über eine Abtriebswelle 3, die nur in Fig. 2 dargestellt ist, auf das Antriebsrad 102 des Fahrrads 100 übertragen. Die Abtriebswelle 3 ist dazu über ein erstes Kettenblatt 110, das mit der Abtriebswelle 3 drehfest verbunden ist, ein zweites Kettenblatt 112, das mit dem Antriebsrad 102 drehfest verbunden ist, und eine dazwischen angeordnete Kette 111 mit dem Antriebsrad 102 antriebswirksam verbunden. Mithin bilden die beiden Kettenblätter 110, 112 und die Kette 111 einen als Kettentrieb ausgebildeten Zugmitteltrieb 101. Alternativ ist auch die Verwendung eines Riementriebs denkbar, um eine Antriebsleistung von der Antriebsvorrichtung 1 auf das Antriebsrad 102 des Fahrrads 100 zu übertragen.

Ferner sind an dem Fahrradlenker 105 Eingabemittel 106 angeordnet, die der Fahrradfahrer zur Eingabe verwenden kann. Beispielsweise sind die Eingabemittel 106 als Betätigungstasten ausgebildet, wobei eine erste Betätigungstaste zum Runterschalten eines Ganges und eine zweite Betätigungstaste zum Hochschalten eines Ganges vorgesehen sind. Das Runterschalten eines Ganges, also eine Gangrückschaltung verändert die Übersetzung im Schaltgetriebe 2 derart, dass die Drehzahl an der Abtriebswelle 3 erhöht und das Drehmoment an der Abtriebswelle 3 verringert wird. An dem Fahrradlenker 105 ist ferner auch eine optische Anzeigevorrichtung 107 angeordnet, die dazu eingerichtet ist, zumindest antriebsspezifische Anzeigedaten, insbesondere eine Gangstufe und eine Geschwindigkeit des Fahrrads 100 für den Fahrradfahrer zu visualisieren.

In Fig. 2 ist die Antriebsvorrichtung 1 des Fahrrads 100 aus Fig. 1 stark vereinfacht dargestellt. Die Antriebsvorrichtung 1 umfasst das Schaltgetriebe 2, das mehrere Gänge und die Abtriebswelle 3 aufweist. Die Gänge werden durch miteinander im Zahneingriff stehende Zahnradpaare, die vorliegend nicht dargestellt sind, realisiert. Der jeweilige Gang ist mittels einer Schalteinrichtung 4 einstellbar, wobei die Schalteinrichtung 4 einen - nicht näher dargestellten - Aktuator und eine - nicht näher dargestellte - Schaltwalze zur Auswahl und Betätigung jeweiliger Zahnradpaare aufweist.

Eine Kurbelwelle 5 verbindet die Tretkurbeln 6 drehfest miteinander, wobei über die Pedalen 109 an den Tretkurbeln 6 die Antriebsleistung des Fahrradfahrers in das Schaltgetriebe 2 eingeleitet wird. Die Kurbelwelle 5 ist mit der Abtriebswelle 3 des Schaltgetriebe 2 wirkverbunden. Die elektrische Maschine 7 weist eine Rotorwelle 8 auf, die zum Einleiten einer Antriebleistung der elektrischen Maschine 7 in das Schaltgetriebe 2 über einen Freilauf 9 mit der Abtriebswelle 3 wirkverbindbar ist. Der Freilauf 9 ist derart ausgebildet, dass die Abtriebswelle 3 von der Rotorwelle 8 entkoppelt wird, wenn eine Abtriebswellendrehzahl größer als eine Rotorwellendrehzahl ist. Dadurch wird verhindert, dass der Fahrradfahrer bei leerem Energiespeicher die Rotorwelle 8 der elektrischen Maschine 7 mitschleppt. Mithin verbindet der Freilauf 9 die Abtriebswelle 3 und die Rotorwelle 8 nur dann drehfest miteinander, wenn die Rotorwellendrehzahl größer als die Abtriebswellendrehzahl ist. Die Abtriebswelle 3 ist über den Zugmitteltrieb 101 mit dem Antriebsrad 102 des Fahrrads 100 antriebswirksam verbunden, um die Antriebsleistung von der Antriebsvorrichtung 1 auf das Antriebsrad 102 des Fahrrads 100 zu übertragen.

Ferner weist die Antriebsvorrichtung 1 zumindest einen ersten Sensor 11, einen zweiten Sensor 12, einen dritten Sensor 13 und eine Steuereinrichtung 10 auf. Der erste Sensor 11 ist an der Kurbelwelle 5 angeordnet und als Mittel zum Erfassen eines Tretkurbelwinkels sowie einer Kurbelwellendrehzahl und Generieren entsprechender Sensordaten ausgebildet. Der zweite Sensor 12 ist an der Abtriebswelle 103 angeordnet und als Mittel zum Erfassen einer Abtriebswellendrehzahl und Generieren entsprechender Sensordaten ausgebildet. Der dritte Sensor 13 ist an der Rotorwelle 8 angeordnet und als Mittel zum Erfassen einer Rotorwellendrehzahl und Generieren entsprechender Sensordaten ausgebildet. Die Steuereinrichtung 10 ist mit den Sensoren 11, 12, 13 verbunden, wobei die Sensordaten von der Steuereinrichtung 10 empfangen und verarbeitet werden, um eine Gangrückschaltung aus einem aktuell eingelegten Gang in einen nächstkleineren Gang in Abhängigkeit dieser Sensordaten durch Bestromung der elektrischen Maschine 7 zu steuern.

Insbesondere wird der Schaltablauf derart gesteuert, dass die elektrische Maschine 7 in Abhängigkeit der Sensordaten gezielte bestromt wird, um zu bestimmten Zeitpunkten, insbesondere bei bestimmten Winkelbereichen der Tretkurbeln 6 eine Drehzahl und ein Drehmoment derart zu beeinflussen, dass Kräfte beim Einlegen und Auslegen der Gänge, also während des Gangwechsels, reduziert werden und dadurch der Verschleiß der Antriebsvorrichtung 1 verringert wird.

In Fig. 1 und Fig. 2 sind die Tretkurbeln 6 in einem Totpunkt dargestellt, also vertikal ausgerichtet. Mit anderen Worten ist eine der beiden Tretkurbeln 6 in einem Winkel von 0 Grad bzw. 360 Grad ausgerichtet und die anderen der beiden Tretkurbeln 6 in einem Winkel von 180 Grad ausgerichtet. In dieser Stellung der Tretkurbeln 6 kann der Fahrradfahrer über die Pedalen 109 nur ein minimales Drehmoment und somit nur eine minimale Antriebsleistung in die Antriebsvorrichtung 1 einspeisen, weil ein Hebelarm minimal ist. Wenn die Tretkurbeln 6 horizontal ausgerichtet sind, also um 90 Grad verdreht gegenüber der dargestellten vertikalen Stellung, kann der Fahrradfahrer über die Pedalen 109 ein maximales Drehmoment und somit eine maximale Antriebsleistung in die Antriebsvorrichtung 1 einspeisen, weil der Hebelarm die maximale Länge aufweist. Somit kann der Drehmomentverlauf des Fahrradfahrers durch eine sinusförmige Funktion beschrieben werden, wobei die Hochpunkte des Drehmomentverlaufs stets bei einer horizontalen Ausrichtung der Tretkurbeln, also 90 Grad und 270 Grad und die Tiefpunkte des Drehmomentverlaufs oder Totpunkte der Tretkurbeln 6 stets bei einer vertikalen Ausrichtung der Tretkurbeln 6, also bei 0 Grad bzw. 360 Grad und 180 Grad vorliegen.

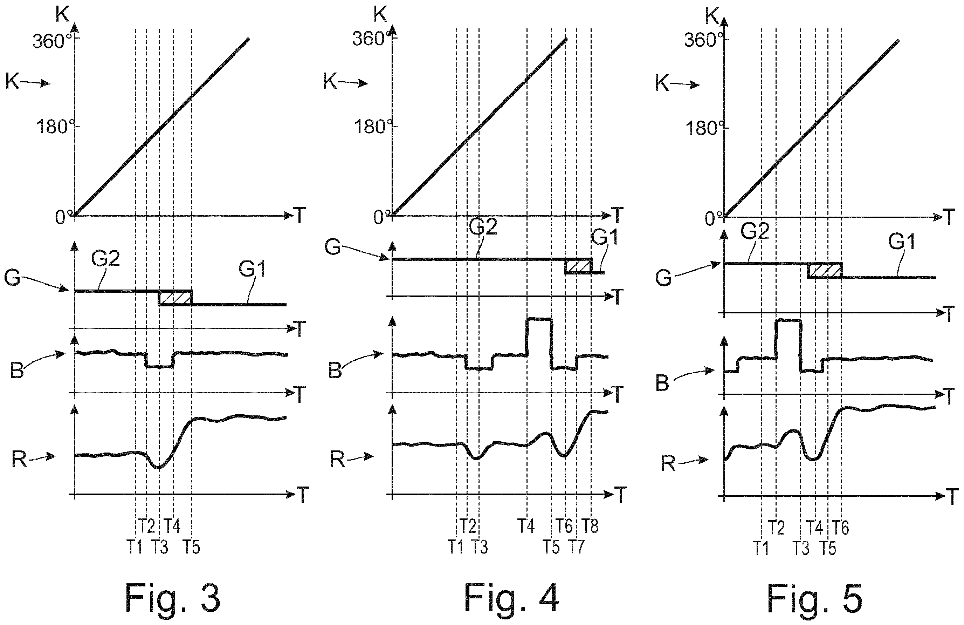

Gemäß Fig. 3 sind vier Diagramme in einem gemeinsamen Diagramm zusammengeführt, um ein erstes erfindungsgemäßes Verfahren zur Steuerung der Antriebsvorrichtung 1 gemäß Fig. 2 zu veranschaulichen. Auf einer jeweiligen Abszisse der vier Diagramme ist eine Zeit T aufgetragen, wobei alle vier Zeitachsen identisch sind und somit denselben zeitlichen Verlauf aufweisen. Demgegenüber sind auf einer jeweiligen Ordinate - von unten nach oben - zunächst eine Rotorwellendrahzahl R, darüber eine Bestromung B der elektrischen Maschine 7, darüber die Gangauswahl G und darüber der Tretkurbelwinkel K aufgetragen. Der Tretkurbelwinkel K verändert sich beim Rotieren der Kurbelwelle 5 zwischen 0 Grad und 360 nach Maßgabe der Kadenz. Beispielsweise beträgt die Kadenz 60, sodass der Fahrradfahrer durch seine Trittfrequenz die Kurbelwelle 5 mit einer Drehzahl von 60 Umdrehungen pro Minute betreibt. Zur Vereinfachung ist vorliegend die Trittfrequenz konstant.

Zum Zeitpunkt T1 wird beispielsweise vom Fahrradfahrer über Eingabemittel eine Gangrückschaltung aus einem aktuell eingelegten Gang G2 in einen nächstkleineren Gang G1 angefordert.

Zum Zeitpunkt T2 wird die Bestromung B der elektrischen Maschine abgeschaltet, wobei der Tretkurbelwinkel K zu diesem Zeitpunkt beispielsweise 10 Grad vor Erreichen eines Totpunktes der Tretkurbel liegt. Dadurch sinkt die Rotorwellendrehzahl R. Sobald die Rotorwellendrehzahl R geringer als die Abtriebswellendrehzahl ist, entkoppelt der Freilauf die Rotorwelle von der Abtriebswelle.

Zum Zeitpunkt T3 ist der Totpunkt der Tretkurbel erreicht. Ferner ist zum Zeitpunkt T3 die Kurbelwellendrehzahl kleiner als eine Abtriebswellendrehzahl, sodass der aktuell eingelegte Gang G2 besonders verschleißarm ausgelegt wird, da keine Kraft über die Kurbelwelle und die Rotorwelle auf das Schaltgetriebe aufgeprägt wird. Das Auslegen des aktuell eingelegten Gangs G2 wird grafisch durch den schraffierten Bereich bei der Gangauswahl G zwischen dem Zeitpunkt T3 und T5 dargestellt.

Zum Zeitpunkt T4 ist der Totpunkt der Tretkurbel überschritten, wobei die elektrische Maschine nun derart stark bestromt wird, dass eine Rotorwellendrehzahl R an eine höhere Zieldrehzahl für den nächstkleineren Gang G1 angenähert wird. Insbesondere entspricht die Bestromung der elektrischen Maschine zum Zeitpunkt T4 im Wesentlichen der Bestromung der elektrischen Maschine zum Zeitpunkt T1, also vor der Absenkung der Bestromung, wodurch ein weicher Übergang geschaffen wird.

Zum Zeitpunkt T5 ist die Zieldrehzahl für den nächstkleineren Gang G1 erreicht, wobei der nächstkleinere Gang G1 besonders verschleißarm eingelegt wird. Die Gangrückschaltung ist dadurch abgeschlossen.

Gemäß Fig. 4 sind vier Diagramme in einem gemeinsamen Diagramm zusammengeführt, um ein zweites erfindungsgemäßes Verfahren zur Steuerung der Antriebsvorrichtung 1 gemäß Fig. 2 zu veranschaulichen. Auf einer jeweiligen Abszisse der vier Diagramme ist eine Zeit T aufgetragen, wobei alle vier Zeitachsen identisch sind und somit denselben zeitlichen Verlauf aufweisen. Demgegenüber sind auf einer jeweiligen Ordinate - von unten nach oben - zunächst eine Rotorwellendrahzahl R, darüber eine Bestromung B der elektrischen Maschine 7, darüber die Gangauswahl G und darüber der Tretkurbelwinkel K aufgetragen. Der Tretkurbelwinkel K verändert sich beim Rotieren der Kurbelwelle 5 zwischen 0 Grad und 360 nach Maßgabe der Kadenz. Beispielsweise beträgt die Kadenz 60, sodass der Fahrradfahrer durch seine Trittfrequenz die Kurbelwelle 5 mit einer Drehzahl von 60 Umdrehungen pro Minute betreibt. Zur Vereinfachung ist vorliegend die Trittfrequenz konstant.

Zum Zeitpunkt T1 wird beispielsweise vom Fahrradfahrer über Eingabemittel eine Gangrückschaltung aus einem aktuell eingelegten Gang G2 in einen nächstkleineren Gang G1 angefordert.

Zum Zeitpunkt T2 wird die Bestromung B der elektrischen Maschine abgeschaltet, wobei der Tretkurbelwinkel K zu diesem Zeitpunkt beispielsweise 10 Grad vor Erreichen eines ersten Totpunktes der Tretkurbel liegt. Dadurch sinkt die Rotorwellendrehzahl R. Sobald die Rotorwellendrehzahl R geringer als die Abtriebswellendrehzahl ist, entkoppelt der Freilauf die Rotorwelle von der Abtriebswelle.

Zum Zeitpunkt T3 ist der erste Totpunkt der Tretkurbel erreicht. Jedoch ist zum Zeitpunkt T3 eine Kurbelwellendrehzahl größer als eine Abtriebswellendrehzahl. Die elektrische Maschine wird wieder wie vor der Stromabsenkung bestromt.

Zum Zeitpunkt T4 ist der erste Totpunkt der Tretkurbel überschritten. Zum Zeitpunkt T4 wird die elektrische Maschine bei 50 Grad vor Erreichen eines zweiten Totpunktes der Tretkurbel um 20% stärker als zuvor bestromt, sodass die Abtriebswellendrehzahl ansteigt.

Zum Zeitpunkt T5 wird die Bestromung B der elektrischen Maschine abgeschaltet, wobei der Tretkurbelwinkel K zu diesem Zeitpunkt beispielsweise 10 Grad vor Erreichen eines zweiten Totpunktes der Tretkurbel liegt. Dadurch sinkt die Rotorwellendrehzahl R. Sobald die Rotorwellendrehzahl R geringer als die Abtriebswellendrehzahl ist, entkoppelt der Freilauf die Rotorwelle von der Abtriebswelle.

Zum Zeitpunkt T6 ist der zweite Totpunkt der Tretkurbel erreicht. Ferner ist zum Zeitpunkt T6 die Kurbelwellendrehzahl kleiner als eine Abtriebswellendrehzahl, sodass der aktuell eingelegte Gang G2 besonders verschleißarm ausgelegt wird, da keine Kraft über die Kurbelwelle und die Rotorwelle auf das Schaltgetriebe aufgeprägt wird. Das Auslegen des aktuell eingelegten Gangs G2 wird grafisch durch den schraffierten Bereich bei der Gangauswahl G zwischen dem Zeitpunkt T6 und T8 dargestellt. Es wird darauf hingewiesen, dass der aktuell eingelegte Gang G2 nur dann ausgelegt wird, wenn eine Kurbelwellendrehzahl kleiner als eine Abtriebswellendrehzahl ist, ansonsten werden die Verfahrensschritte zwischen T4 und T6 wiederholt, bis diese Bedingung erfüllt ist.

Zum Zeitpunkt T7 ist der zweite Totpunkt der Tretkurbel 6 überschritten, wobei die elektrische Maschine nun derart stark bestromt wird, dass eine Rotorwellendrehzahl R an eine höhere Zieldrehzahl für den nächstkleineren Gang G1 angenähert wird. Insbesondere entspricht die Bestromung der elektrischen Maschine zum Zeitpunkt T7 im Wesentlichen der Bestromung der elektrischen Maschine zum Zeitpunkt T1, also vor der Absenkung der Bestromung, wodurch ein weicher Übergang geschaffen wird.

Zum Zeitpunkt T8 ist die Zieldrehzahl für den nächstkleineren Gang G1 erreicht, wobei der nächstkleinere Gang G1 besonders verschleißarm eingelegt wird. Die Gangrückschaltung ist dadurch abgeschlossen.

Gemäß Fig. 5 sind vier Diagramme in einem gemeinsamen Diagramm zusammengeführt, um ein drittes erfindungsgemäßes Verfahren zur Steuerung der Antriebsvorrichtung 1 gemäß Fig. 2 zu veranschaulichen. Auf einer jeweiligen Abszisse der vier Diagramme ist eine Zeit T aufgetragen, wobei alle vier Zeitachsen identisch sind und somit denselben zeitlichen Verlauf aufweisen. Demgegenüber sind auf einer jeweiligen Ordinate - von unten nach oben - zunächst eine Rotorwellendrahzahl R, darüber eine Bestromung B der elektrischen Maschine 7, darüber die Gangauswahl G und darüber der Tretkurbelwinkel K aufgetragen. Der Tretkurbelwinkel K verändert sich beim Rotieren der Kurbelwelle 5 zwischen 0 Grad und 360 nach Maßgabe der Kadenz. Beispielsweise beträgt die Kadenz 60, sodass der Fahrradfahrer durch seine Trittfrequenz die Kurbelwelle 5 mit einer Drehzahl von 60 Umdrehungen pro Minute betreibt. Zur Vereinfachung ist vorliegend die Trittfrequenz konstant.

Zum Zeitpunkt T1 wird beispielsweise vom Fahrradfahrer über Eingabemittel eine Gangrückschaltung aus einem aktuell eingelegten Gang G2 in einen nächstkleineren Gang G1 angefordert.

Zum Zeitpunkt T2 wird die elektrische Maschine bei 50 Grad vor Erreichen eines Totpunktes der Tretkurbel um 20% stärker als zuvor bestromt, sodass die Abtriebswellendrehzahl ansteigt.

Zum Zeitpunkt T3 wird die Bestromung B der elektrischen Maschine 7 abgeschaltet, wobei der Tretkurbelwinkel K zu diesem Zeitpunkt beispielsweise 10 Grad vor Erreichen des Totpunktes der Tretkurbel liegt. Dadurch sinkt die Rotorwellendrehzahl R. Sobald die Rotorwellendrehzahl R geringer als die Abtriebswellendrehzahl ist, entkoppelt der Freilauf die Rotorwelle von der Abtriebswelle.

Zum Zeitpunkt T4 ist der Totpunkt der Tretkurbel erreicht. Ferner ist zum Zeitpunkt T4 die Kurbelwellendrehzahl kleiner als eine Abtriebswellendrehzahl, sodass der aktuell eingelegte Gang G2 besonders verschleißarm ausgelegt wird, da keine Kraft über die Kurbelwelle und die Rotorwelle auf das Schaltgetriebe aufgeprägt wird. Das Auslegen des aktuell eingelegten Gangs G2 wird grafisch durch den schraffierten Bereich bei der Gangauswahl G zwischen dem Zeitpunkt T4 und T6 dargestellt. Es wird darauf hingewiesen, dass der aktuell eingelegte Gang G2 nur dann ausgelegt wird, wenn eine Kurbelwellendrehzahl kleiner als eine Abtriebswellendrehzahl ist, ansonsten werden die Verfahrensschritte zwischen T2 und T4 wiederholt, bis diese Bedingung erfüllt ist.

Zum Zeitpunkt T5 ist der Totpunkt der Tretkurbel überschritten, wobei die elektrische Maschine 7 nun derart stark bestromt wird, dass eine Rotorwellendrehzahl R an eine höhere Zieldrehzahl für den nächstkleineren Gang G1 angenähert wird. Insbesondere entspricht die Bestromung der elektrischen Maschine zum Zeitpunkt T5 im Wesentlichen der Bestromung der elektrischen Maschine zum Zeitpunkt T1, also vor der Erhöhung der Bestromung, wodurch ein weicher Übergang geschaffen wird.

Zum Zeitpunkt T6 ist die Zieldrehzahl für den nächstkleineren Gang G1 erreicht, wobei der nächstkleinere Gang G1 besonders verschleißarm eingelegt wird. Die Gangrückschaltung ist dadurch abgeschlossen.

### Bezugszeichen

- 1: Antriebsvorrichtung
- 2: Getriebe
- 3: Abtriebswelle
- 4: Schalteinrichtung
- 5: Kurbelwelle
- 6: Tretkurbel
- 7: elektrische Maschine
- 8: Rotorwelle
- 9: Freilauf
- 10: Steuereinrichtung
- 11: erster Sensor
- 12: zweiter Sensor
- 13: dritter Sensor
- 100: Fahrrad
- 101: Zugmitteltrieb
- 102: Antriebsrad
- 103: Vorderrad
- 104: Rahmen
- 105: Fahrradlenker
- 106: Eingabemittel
- 107: Anzeigevorrichtung
- 108: Sattel
- 109: Pedale
- 110: erstes Kettenblatt
- 111: Kette
- 112: zweites Kettenblatt
- B: Bestromung
- G: Gangauswahl
- G1: nächstkleineren Gang
- G2: aktuell eingelegte Gang
- K: Tretkurbelwinkel
- R: Rotorwellendrahzahl
- T: Zeit
- T1: Zeitpunkt
- T2: Zeitpunkt
- T3: Zeitpunkt
- T4: Zeitpunkt
- T5: Zeitpunkt
- T6: Zeitpunkt
- T7: Zeitpunkt
- T8: Zeitpunkt

## Patentansprüche

1. Antriebsvorrichtung (1) für ein Fahrrad (100), umfassend
• ein Schaltgetriebe (2) mit mehreren Gängen und einer Abtriebswelle (3), wobei der jeweilige Gang mittels einer Schalteinrichtung (4) einstellbar ist, wobei die Abtriebswelle (3) dazu eingerichtet ist, über einen Zugmitteltrieb (101) mit einem Antriebsrad (102) des Fahrrads (100) wirkverbunden zu sein,
• eine Kurbelwelle (5) mit einer Tretkurbel (6) zum Einleiten einer Antriebsleistung eines Fahrradfahrers in das Schaltgetriebe (2), wobei die Kurbelwelle (5) mit der Abtriebswelle (3) wirkverbunden ist,
• eine elektrische Maschine (7) mit einer Rotorwelle (8) zum Einleiten einer Antriebleistung der elektrischen Maschine (7) in das Schaltgetriebe (2), wobei die Rotorwelle (8) über einen Freilauf (9) mit der Abtriebswelle (3) wirkverbindbar ist, wobei der Freilauf (9) dazu eingerichtet ist, die Abtriebswelle (3) von der Rotorwelle (8) zu entkoppeln, wenn eine Abtriebswellendrehzahl größer als eine Rotorwellendrehzahl ist,
• Mittel zum Erfassen eines Tretkurbelwinkels sowie einer Kurbelwellendrehzahl und Generieren entsprechender Sensordaten,
• Mittel zum Erfassen einer Abtriebswellendrehzahl und Generieren entsprechender Sensordaten,
• Mittel zum Erfassen einer Rotorwellendrehzahl und Generieren entsprechender Sensordaten, und
• eine Steuereinrichtung (10), die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine (7) zu steuern.

2. Antriebsvorrichtung (1) nach Anspruch 1, wobei mindestens ein erster Sensor (11) mit der Kurbelwelle (5) drehfest verbunden und als Mittel zum Erfassen eines Tretkurbelwinkels sowie einer Kurbelwellendrehzahl eingerichtet ist.

3. Antriebsvorrichtung (1) nach einem der vorhergehenden Ansprüche, wobei mindestens ein zweiter Sensor (12) mit der Abtriebswelle (3) drehfest verbunden und als Mittel zum Erfassen einer Abtriebswellendrehzahl und Generieren entsprechender Sensordaten eingerichtet ist.

4. Antriebsvorrichtung (1) nach einem der vorhergehenden Ansprüche, wobei mindestens ein dritter Sensor (13) mit der Rotorwelle (8) drehfest verbunden und als Mittel zum Erfassen einer Rotorwellendrehzahl und Generieren entsprechender Sensordaten eingerichtet ist.

5. Verfahren zur Steuerung einer Antriebsvorrichtung (1) nach einem der Ansprüche 1 bis 4, **dadurch gekennzeichnet, dass**
• bei Anforderung einer Gangrückschaltung aus einem aktuell eingelegten Gang in einen nächstkleineren Gang eine Bestromung der elektrischen Maschine (7) in einem Bereich von mindestens 1 Grad bis höchstens 45 Grad vor Erreichen eines Totpunktes der Tretkurbel (6) zumindest derart abgesenkt wird, dass eine Rotorwellendrehzahl geringer als eine Abtriebswellendrehzahl ist,
• wobei wenn eine Kurbelwellendrehzahl kleiner als eine Abtriebswellendrehzahl ist, wird der aktuell eingelegte Gang ausgelegt,
• wobei die elektrische Maschine (7) nach Überschreitung des Totpunktes der Tretkurbel (6) derart stark bestromt wird, dass eine Rotorwellendrehzahl an eine höhere Zieldrehzahl für den nächstkleineren Gang angenähert wird,
• wobei der nächstkleinere Gang eingelegt wird, sobald die Zieldrehzahl für den nächstkleineren Gang erreicht wird.

6. Verfahren zur Steuerung einer Antriebsvorrichtung (1) nach einem der Ansprüche 1 bis 4, **dadurch gekennzeichnet, dass**
• bei Anforderung einer Gangrückschaltung aus einem aktuell eingelegten Gang in einen nächstkleineren Gang eine Bestromung der elektrischen Maschine (7) in einem Bereich von mindestens 1 Grad bis höchstens 45 Grad vor Erreichen eines Totpunktes der Tretkurbel (6) zumindest derart abgesenkt wird, dass eine Rotorwellendrehzahl geringer als eine Abtriebswellendrehzahl ist,
• wobei wenn eine Kurbelwellendrehzahl größer als eine Abtriebswellendrehzahl ist, wird die elektrische Maschine (7) in einem Bereich von mindestens 45 Grad bis höchstens 90 Grad vor Erreichen eines nächsten Totpunktes der Tretkurbel (6) derart stark bestromt, dass die Abtriebswellendrehzahl erhöht wird,
• wobei eine Bestromung der elektrischen Maschine (7) in einem Bereich von mindestens 1 Grad bis höchstens 45 Grad vor Erreichen des Totpunktes der Tretkurbel (6) derart abgesenkt wird, dass eine Rotorwellendrehzahl geringer als eine Abtriebswellendrehzahl ist,
• wobei der aktuell eingelegte Gang nur dann ausgelegt wird, wenn eine Kurbelwellendrehzahl kleiner als eine Abtriebswellendrehzahl ist, ansonsten werden die beiden vorhergehenden Verfahrensschritte wiederholt,
• wobei die elektrische Maschine (7) nach Überschreitung des Totpunktes der Tretkurbel (6) derart stark bestromt wird, dass eine Rotorwellendrehzahl an eine höhere Zieldrehzahl für den nächstkleineren Gang angenähert wird,
• wobei der nächstkleinere Gang eingelegt wird, sobald die Zieldrehzahl für den nächstkleineren Gang erreicht wird.

7. Verfahren zur Steuerung einer Antriebsvorrichtung (1) nach einem der Ansprüche 1 bis 4, **dadurch gekennzeichnet, dass**
• bei Anforderung einer Gangrückschaltung aus einem aktuell eingelegten Gang in einen nächstkleineren Gang eine Bestromung der elektrischen Maschine (7) in einem Bereich von mindestens 45 Grad bis höchstens 90 Grad vor Erreichen eines Totpunktes der Tretkurbel (6) derart erfolgt, dass die Abtriebswellendrehzahl erhöht wird,
• wobei eine Bestromung der elektrischen Maschine (7) in einem Bereich von mindestens 1 Grad bis höchstens 45 Grad vor Erreichen des Totpunktes der Tretkurbel (6) derart abgesenkt wird, dass eine Rotorwellendrehzahl geringer als eine Abtriebswellendrehzahl ist,
• wobei der aktuell eingelegte Gang nur dann ausgelegt wird, wenn eine Kurbelwellendrehzahl kleiner als eine Abtriebswellendrehzahl ist, ansonsten werden die beiden vorhergehenden Verfahrensschritte wiederholt,
• wobei die elektrische Maschine (7) nach Überschreitung des Totpunktes der Tretkurbel (6) derart stark bestromt wird, dass eine Rotorwellendrehzahl an eine höhere Zieldrehzahl für den nächstkleineren Gang angenähert wird,
• wobei der nächstkleinere Gang eingelegt wird, sobald die Zieldrehzahl für den nächstkleineren Gang erreicht wird.

8. Verfahren nach Anspruch 6 oder 7, wobei die Bestromung der elektrischen Maschine (7) in dem Bereich von mindestens 45 Grad bis höchstens 90 Grad vor Erreichen des Totpunktes der Tretkurbel (6) um mindestens 20% angehoben wird.

9. Verfahren nach einem der Ansprüche 5 bis 8, wobei die Bestromung der elektrischen Maschine (7) in dem Bereich von mindestens 1 Grad bis höchstens 45 Grad vor Erreichen des Totpunktes der Tretkurbel (6) abgestellt wird.

10. Verfahren nach einem der Ansprüche 5 bis 9, wobei die Bestromung der elektrischen Maschine (7) nach Überschreiten des Totpunktes der Tretkurbel (6) im Wesentlichen der Bestromung der elektrischen Maschine (7) vor der Absenkung der Bestromung entspricht.

11. Steuereinrichtung (10), die dazu ausgebildet ist, ein Verfahren nach einem der Ansprüche 5 bis 10 durchzuführen.

12. Fahrrad (100), umfassend eine Antriebsvorrichtung (1) nach einem der Ansprüche 1 bis 4, wobei die Antriebsvorrichtung (1) über einen Zugmitteltrieb (101) mit einem Antriebsrad (102) des Fahrrads (100) wirkverbunden ist.
